# EUROPEAN PATENT APPLICATION

(11) **EP 4 187 454 A1**
(43) Date of publication of application: **31.05.2023**
(21) Application number: 21845207.6
(22) Date of filing: 21.07.2021
(51) Int. Cl.: G06Q 10/00

(54) **FAILURE IDENTIFICATION AND HANDLING METHOD, AND SYSTEM**

(30) Priority: 22.07.2020 CN 202010709092
(71) Applicant: Daikin Industries, Ltd., Osaka-shi, Osaka 530-0001 (JP)
(72) Inventor: PAN, Si, Osaka-shi, Osaka 530-0001 (JP)
(74) Representative: Global IP Europe Patentanwaltskanzlei
(86) International application number: PCT/JP2021/027277
(87) International publication number: WO 2022/019324

(57) **Abstract**

The present disclosure provides a failure identification and handling method and system. In the failure identification and handling method and system, video including a failure code is captured and the failure code is identified on the basis of the video, whereby the complete failure code can be accurately identified without being limited by the failure code display type or the image acquisition parameters. Thus, it is possible to obtain failure-related information quickly and accurately on the basis of the identified complete and accurate failure code.

## Description

### TECHNICAL FIELD

The present invention relates to the field of machine maintenance, and more specifically to a failure identification and handling method and system.

### BACKGROUND ART

With the development of science and technology and the improvement of living standards, various electronic devices or electric devices have been widely applied in various fields. When a failure occurs in a device, a user or an after-sales service person usually views a failure code displayed on a panel of the device at a site, and then retrieves failure-related information corresponding to the failure code from a maintenance manual to confirm or eliminate the failure. However, such a method is time-consuming and if the failure is rather complicated, the user cannot confirm or eliminate the failure by himself or herself, and needs to contact an after-sales service person to request a visiting service, thereby taking longer time and affecting the normal use of the device. In addition, the failure-related information and the elimination method described in the maintenance manual are not intuitive, which affects the accuracy of failure confirmation and the efficiency of failure elimination.

In recent years, a method of confirming a failure by identifying information has been proposed.

For example, a camera collection module captures an LED lamp group image by a camera and transmits the LED lamp group image to a failure position identification, the failure collection and the failure identification module, so that the failure position identification, the failure collection and the failure identification module performs image identification and analysis on the LED lamp group image to obtain the specific state information of the hardware circuit, analyzes a failure on the basis of a lamp group encoding information base, obtains an analysis result of the hardware circuit, and then performs feedback.

In addition, for example, a digital camera is used to capture an image such as a system error code displayed on a display unit of a user computer, and the image is transmitted to a failure recovery process server by a mobile phone. The server detects the system error code on the basis of the image, obtains failure content information associated with the error code from a database, and transmits the failure content information to the mobile phone.

Further, for example, if a two dimensional code is displayed on the panel of the device together with the failure code, the user can quickly access the homepage containing the maintenance information after scanning the two dimensional code, and thus obtain the failure and maintenance information.

It should be noted that the above-described introduction to the technical background is merely intended to facilitate a clearer and complete description of the technical solutions of the present disclosure, and to facilitate understanding of those skilled in the art. Only with the description of these technical solutions in Background Art of the present disclosure, the above-described technical solutions are not considered to be known to those skilled in the art.

### SUMMARY OF INVENTION

### TECHNICAL PROBLEM

However, the present inventor has obtained the following findings. In the above-mentioned method in the related art, the display type of a failure code is varied, or limited by parameters such as an image acquisition speed and acquisition time. Thus, the display of a failure code in a single image may be incomplete or inaccurate, and the related failure or maintenance information may not be obtained accurately and timely, thereby affecting the use of the device. In addition, in the method of obtaining failure and maintenance information by scanning a two dimensional code and accessing a home page, it is necessary to design a proper two dimensional code for various failures in each device, which increases the manufacturing burden of the device, and disables wide application to existing general devices.

### SOLUTION TO PROBLEM

In order to solve at least one of the above-described problems, the present disclosure proposes a failure identification and handling method and system. With this, video including a failure code is captured and the failure code is identified on the basis of the video, whereby a complete failure code can be accurately identified without being limited by the failure code display type or the image acquisition parameters. Thus, it is possible to obtain failure-related information quickly and accurately on the basis of the identified complete and accurate failure code.

A first aspect of the embodiment of the present disclosure provides a failure identification and handling method, including: a step of capturing video including a failure code; a step of identifying the failure code in the video and obtaining an identified failure code; a step of determining failure-related information corresponding to the failure code on the basis of the identified failure code, and generating display data on the basis of the failure-related information; and a step of displaying the failure-related information on the basis of the display data.

A second aspect of the embodiment of the present disclosure provides a failure identification and handling system, including: an imaging unit that captures video including a failure code; an identification unit that identifies the failure code in the video and obtains an identified failure code; a determination unit that determines failure-related information corresponding to the failure code on the basis of the identified failure code, and generates display data on the basis of the failure-related information; and a display unit that displays the failure-related information on the basis of the display data.

A third aspect of the embodiment of the present disclosure provides a terminal device, including: an imaging unit that captures video including a failure code; a first transmission unit that transmits the video to a server; a first reception unit that receives display data from the server; and a display unit that displays failure-related information on the basis of the display data.

A fourth aspect of the embodiment of the present disclosure provides a server, including: a second reception unit that receives video including a failure code captured by a terminal device from the terminal device; an identification unit that identifies the failure code in the video and obtains an identified failure code; a determination unit that determines failure-related information corresponding to the failure code on the basis of the identified failure code, and generates display data on the basis of the failure-related information; and a second transmission unit that transmits the display data to the terminal device.

A fifth aspect of the embodiment of the present disclosure provides a terminal device, including: an imaging unit that captures video including a failure code; an identification unit that identifies the failure code in the video and obtains an identified failure code; a determination unit that determines failure-related information corresponding to the failure code on the basis of the identified failure code, and generates display data on the basis of the failure-related information; and a display unit that displays the failure-related information on the basis of the display data.

One beneficial effect of the embodiments of the present disclosure is as follows. Video including a failure code is captured and the failure code is identified on the basis of the video, whereby a complete failure code can be accurately identified without being limited by the failure code display type or the image acquisition parameters. Thus, it is possible to obtain failure-related information quickly and accurately on the basis of the identified complete and accurate failure code.

With reference to the following description and drawings, specific embodiments of the present disclosure are disclosed in detail, and the use of the principles of the present disclosure is also described. It should be understood that the embodiments of the present disclosure are not limited thereto in scope. Embodiments of the present disclosure include many alterations, modifications, and equivalents within the spirit and scope of the appended claims.

The feature information described and illustrated in one embodiment may be used in the same or a similar form in one or more other embodiments, may be combined with features of other embodiments, or may be used instead of the feature information of other embodiments.

It should be emphasized that the term "comprising/including" is used herein to indicate the presence of feature information, a constituent member, a step, or a member, but does not eliminate the presence or addition of one or more other feature information, constituent members, steps, or members.

Many aspects of the present disclosure can be better understood with reference to the accompanying drawings. The components illustrated in the accompanying drawings are not drawn proportionally, but are merely illustrative of the principles of the present disclosure. Portions corresponding to the accompanying drawings may be enlarged or reduced in size so as to facilitate representation and description of some parts according to the present disclosure. Elements or feature information illustrated in one accompanying drawing or one embodiment according to the present disclosure may be combined with elements or feature information illustrated in one or more other accompanying drawings or embodiments. Moreover, similar reference numerals in the accompanying drawings indicate corresponding members in the several accompanying drawings, and can also indicate corresponding elements used in one or more embodiments.

### BRIEF DESCRIPTION OF DRAWINGS

[Fig. 1] Fig. 1 is a schematic diagram of a failure identification and handling method according to a first embodiment of the present disclosure.
[Fig. 2] Fig. 2 is a schematic diagram of a display type for a failure code according to the first embodiment of the present disclosure.
[Fig. 3] Fig. 3 is a schematic diagram of the display type for a failure code according to the first embodiment of the present disclosure.
[Fig. 4] Fig. 4 is a schematic diagram of another display type for a failure code according to the first embodiment of the present disclosure.
[Fig. 5] Fig. 5 is a schematic diagram of the other display type for a failure code according to the first embodiment of the present disclosure.
[Fig. 6] Fig. 6 is a schematic diagram of still another display type for a failure code according to the first embodiment of the present disclosure.
[Fig. 7] Fig. 7 is a schematic diagram of the still other display type for a failure code according to the first embodiment of the present disclosure.
[Fig. 8] Fig. 8 is a schematic diagram of an implementation method of Step 102 according to the first embodiment of the present disclosure.
[Fig. 9] Fig. 9 is a schematic diagram of another implementation method of Step 102 according to the first embodiment of the present disclosure.
[Fig. 10] Fig. 10 is a schematic diagram of still another implementation method of Step 102 according to the first embodiment of the present disclosure.
[Fig. 11] Fig. 11 is a schematic diagram of superimposed adjacent frames of the video according to the first embodiment of the present disclosure.
[Fig. 12] Fig. 12 is a schematic diagram of a failure identification and handling system according to a second embodiment of the present disclosure.
[Fig. 13] Fig. 13 is a schematic diagram of the failure identification and handling system according to the second embodiment of the present disclosure performing a corresponding method.
[Fig. 14] Fig. 14 is a schematic view of an embodiment of an identification unit according to the second embodiment of the present disclosure.
[Fig. 15] Fig. 15 is a schematic view of another embodiment of the identification unit according to the second embodiment of the present disclosure.
[Fig. 16] Fig. 16 is a schematic diagram of a second identification module according to the second embodiment of the present disclosure.
[Fig. 17] Fig. 17 is a schematic view of another embodiment of the identification unit according to the second embodiment of the present disclosure.
[Fig. 18] Fig. 18 is a schematic diagram of a fourth identification module according to the second embodiment of the present disclosure.
[Fig. 19] Fig. 19 is a schematic diagram of a terminal device according to a third embodiment of the present disclosure.

### DESCRIPTION OF EMBODIMENTS

Hereinafter, preferred embodiments of the present disclosure will be described with reference to the drawings.

### (First Embodiment)

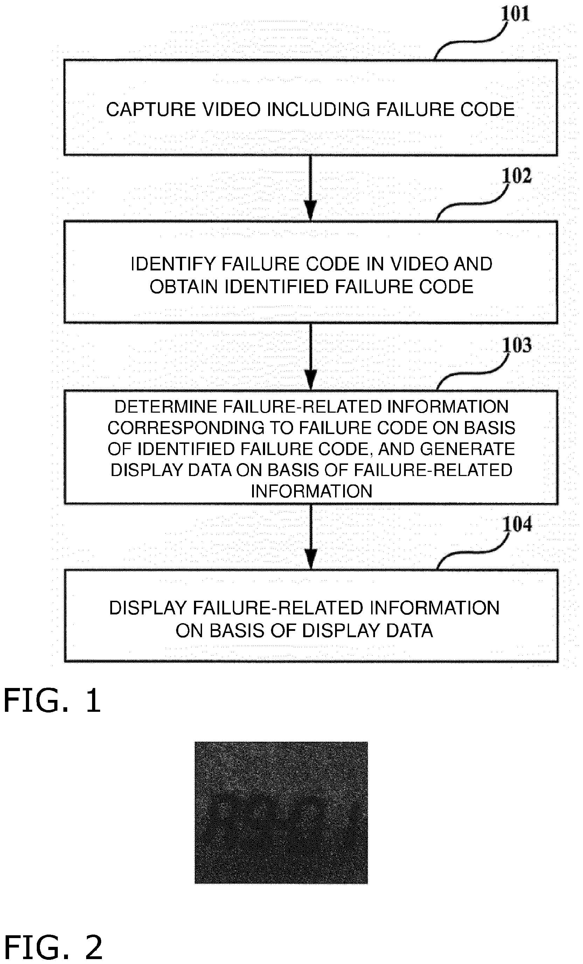

A first embodiment of the present disclosure provides a failure identification and handling method. Fig. 1 is a schematic diagram of a failure identification and handling method according to the first embodiment of the present disclosure. As illustrated in Fig. 1, the method includes
Step 101: capturing video including a failure code,
Step 102: identifying the failure code in the video and obtaining an identified failure code,
Step 103: determining the failure-related information corresponding to the failure code on the basis of the identified failure code, and generating display data on the basis of the failure-related information, and
Step 104: displaying the failure-related information on the basis of the display data.

In this manner, video including a failure code is captured and the failure code is identified on the basis of the video, whereby a complete failure code can be accurately identified without being limited by the failure code display type or the image acquisition parameters. Thus, it is possible to obtain failure-related information quickly and accurately on the basis of the identified complete and accurate failure code.

In the first embodiment of the present disclosure, the device using this method may be various devices capable of displaying a failure code, such as various industrial devices or various household devices, for example. Examples thereof include devices such as an air conditioner, a washing machine, a refrigerator, and a water heater. When a failure occurs in the device, a failure code is displayed on a display panel of the device.

In the first embodiment of the present disclosure, the manufacturer of the device may indicate a failure code in various ways. For example, the failure code may be composed of at least one of numbers, alphabets, and symbols, and the number of digits thereof may be one or more. The manufacturer of the device may set the specific display format and number of digits of the failure code in accordance with actual needs.

At Step 101, video including a failure code is captured. In the first embodiment of the present disclosure, Step 101 may be performed by a terminal device. That is, the video may be captured by a terminal device. For example, the terminal device may be a smartphone, an intelligent tablet, or intelligent glasses. The intelligent tablet may be a tablet terminal (tablet-type information communication terminal). The intelligent glasses may be smart glasses (glasses-type information communication terminal).

In the first embodiment of the present disclosure, for example, the captured video is generated by capturing a display panel area of the device, and a failure code may be displayed on the display panel. For example, the display panel may be a control panel or another display panel of the device.

For example, the failure code is displayed in a failure display area of the display panel.

In the first embodiment of the present disclosure, the display panel on which a failure code is displayed may be various kinds of display screens. For example, it may be a liquid crystal display screen or a digital tube display screen.

In the first embodiment of the present disclosure, the method may be applied to various failure code display types.

In addition, the time length of the captured video may be determined in accordance with actual needs. For example, it may be determined by a failure code display type.

Hereinafter, failure code display types will be exemplarily described, but the first embodiment of the present disclosure is not limited by these display types.

For example, a failure code may be displayed in a certain period of time and not displayed in a certain period of time in a continuous cycle. In that case, the captured video may include a period of time in which a failure code is displayed.

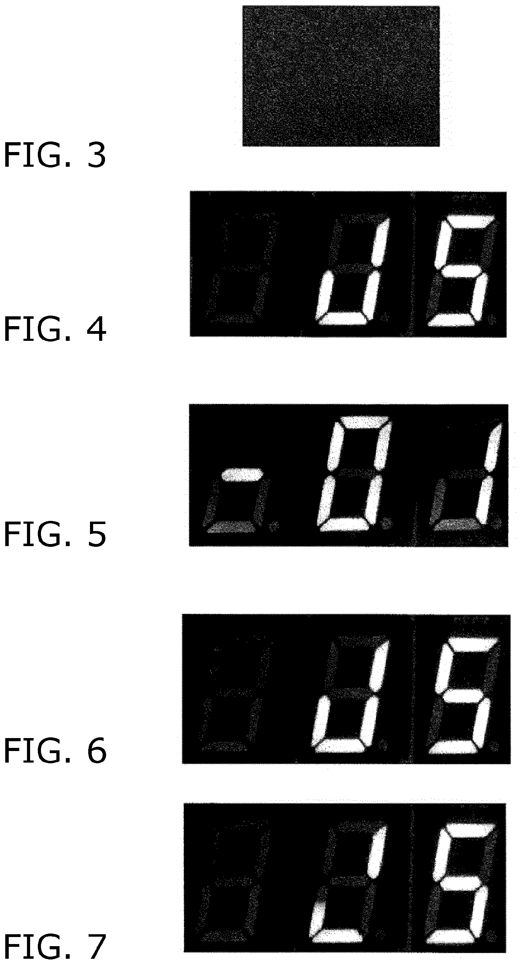

Fig. 2 and Fig. 3 are schematic diagrams of a display type for a failure code according to the first embodiment of the present disclosure. As illustrated in Fig. 2, the failure code is displayed as "A9-01" in a certain period of time. As illustrated in Fig. 3, the failure code is not displayed in a certain period of time.

Further, for example, a part of a failure code may be displayed in a certain period of time, and the remaining part thereof may be displayed in another period of time in a continuous cycle. In that case, the captured video may include a period of time in which a part of the failure code is displayed and another period of time in which the remaining part of the failure code is displayed.

Fig. 4 and Fig. 5 are schematic diagrams of another display type for a failure code according to the first embodiment of the present disclosure. As illustrated in Fig. 4, a part of the failure code is displayed as "J5" in a certain period of time. As illustrated in Fig. 5, the remaining part of the failure code is displayed as "-01" in another period of time.

In the first embodiment of the present application, the part of the failure code may be referred to as an error code and indicate a failed member, while the remaining part thereof may be referred to as a detailed code and indicate detailed contents of the failure. The error code and the detailed code are combined into one complete failure code. For example, "J5" in Fig. 4 indicates an error code, and "-01" in Fig. 5 indicates a detailed code. The combination of both indicates a complete error code "J5-01".

Further, for example, the failure code may be displayed by a digital tube, and may be displayed with blinking at a predetermined frequency on the basis of the display principle of the digital tube. In that case, the time length of the captured video may be any suitable time length, and may be, for example, several seconds for collecting a plurality of frames to identify a failure code.

Fig. 6 and Fig. 7 are schematic diagrams of another display type for a failure code according to the first embodiment of the present disclosure. Since the digital tube displays a failure code with blinking at a predetermined frequency, the failure code "J5" is displayed at the time as illustrated in Fig. 6, and the failure code "J5" is incompletely displayed at the time as illustrated in Fig. 7.

At Step 102, the failure code in the video is identified to obtain the identified failure code. In the first embodiment of the present disclosure, a local terminal device may perform Step 102, or a terminal device may transmit the video data to a remote server, such as a cloud server, for example, so that the server performs Step 102.

The following will specifically and exemplarily describe Step 102 with respect to each of the different display types for a failure code.

For example, in the display system in which a failure code is displayed in a certain period of time and not displayed in a certain period of time in a continuous cycle, that is, in the example illustrated in Figs. 2 and 3, each frame of the video can be sequentially identified at Step 102.

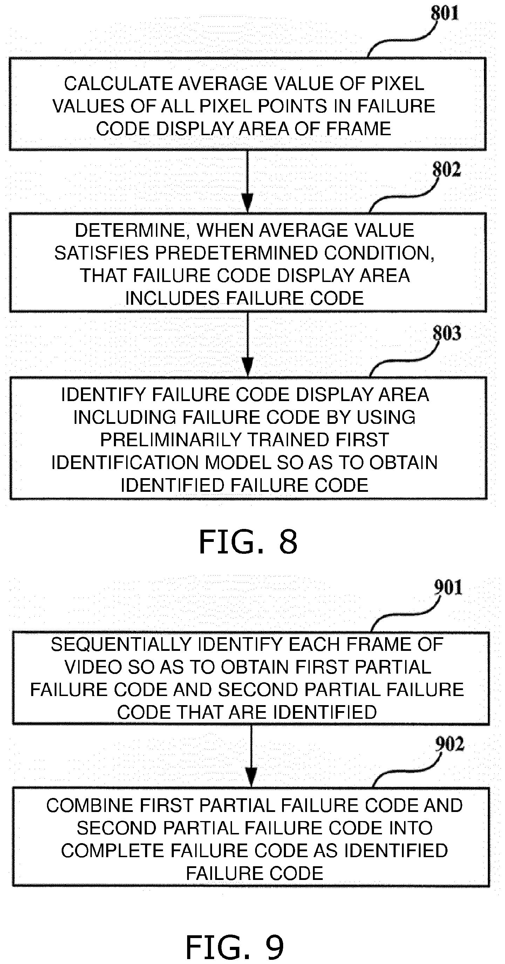

Fig. 8 is a schematic diagram of an implementation method of Step 102 according to the first embodiment of the present disclosure. As illustrated in Fig. 8, the step of identifying one frame of the video includes
Step 801: calculating an average value of pixel values of all pixel points in a failure code display area of the frame,
Step 802: determining, when the average value satisfies a predetermined condition, that the failure code display area includes a failure code, and
Step 803: identifying the failure code display area including the failure code by using a preliminarily trained first identification model so as to obtain the identified failure code.

At Step 802, the predetermined condition may be determined by a difference in display between the failure code and the background of the display area. For example, when the background of the display area is dark and the displayed failure code is bright, the predetermined condition is that the average value of pixel values is larger than a predefined threshold. Further, for example, when the background of the display area is bright and the displayed failure code is dark, the predetermined condition is that the average value of pixel values is smaller than a predefined threshold. Here, the predefined threshold may be determined by a pixel value of the background of the display area.

The first identification model used at Step 803 is a model obtained by training using training data. For example, the first identification model is obtained by training a neural network by using training data. The neural network may have a structure of a neural network in the related art.

In the first embodiment of the present disclosure, when the average value does not satisfy a predetermined condition, it is determined that the failure code display area does not include a failure code, and no processing is performed on the image of the one frame.

In the first embodiment of the present disclosure, if each frame is identified and then the failure codes obtained by identifying the frames match, the failure code is considered to be an identification result, while if the failure codes obtained by identifying the frames do not match, a failure code identified from more frames may be considered to be an identification result.

Further, for example, in the display type in which a part of a failure code is displayed in a certain period of time and the remaining part of the failure code is displayed in another period of time in a continuous cycle, that is, in the example of Figs. 4 and 5, Fig. 9 is a schematic diagram of another implementation method of Step 102 according to the first embodiment of the present disclosure. As illustrated in Fig. 9, the method includes
Step 901: sequentially identifying each frame of the video so as to obtain a first partial failure code and a second partial failure code that are identified, and
Step 902: combining the first partial failure code and the second partial failure code into a complete failure code as an identified failure code.

In this manner, it is possible to identify the display of a complete failure code including different parts at different times, and thus obtain accurate failure-related information.

For example, each frame of the video is sequentially identified, whereby the first partial failure code "J5" in Fig. 4 and the second partial failure code "-01" in Fig. 5 are obtained, and the first partial failure code "J5" and the second partial failure code "-01" are combined into a complete failure code "J5-01".

Here, the step of identifying a frame of the video is similar to Steps 801 to 803, that is, the step includes
calculating an average value of pixel values of all pixel points in a failure code display area of the frame,
determining, when the average value satisfies a predetermined condition, that the failure code display area includes a failure code, and
identifying the failure code display area including the failure code by using a preliminarily trained first identification model so as to obtain the identified first partial failure code or the identified second partial failure code.

In the first embodiment of the present disclosure, which part of the failure code is placed in the front end as the first partial failure code may be determined in accordance with actual needs. For example, a partial failure code including an identified alphabet may be placed in the front end as the first partial failure code. Further, for example, a partial failure code not including an identified symbol may be placed in the front end as a first partial failure code, while a partial failure code including an identified symbol, such as a partial code including the symbol "-", for example, may be placed in the rear end as a second partial failure code.

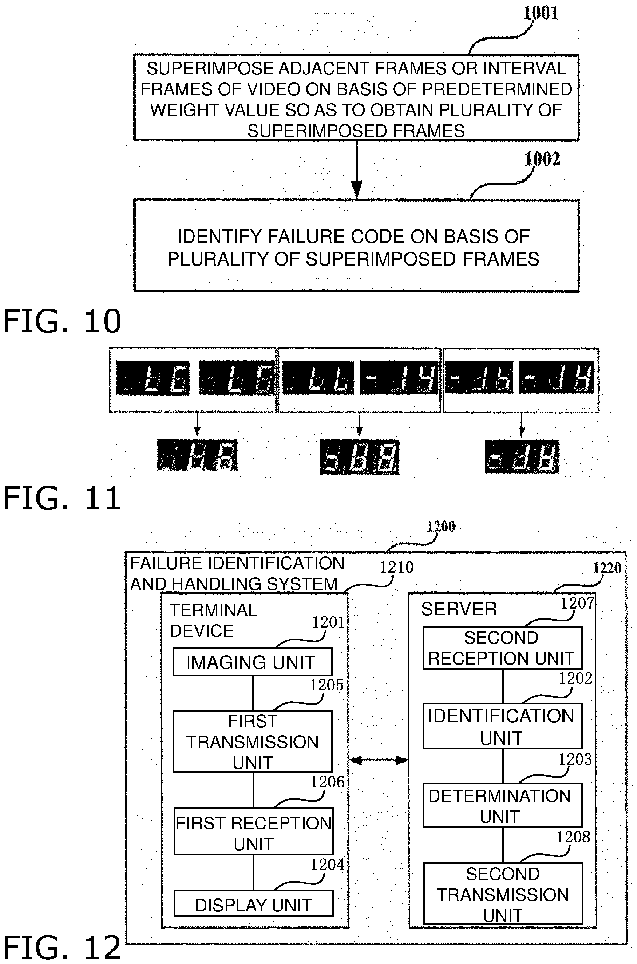

Further, for example, in the display type in which a failure code is displayed with blinking at a certain frequency by the digital tube, that is, in the example of Figs. 6 and 7, Fig. 10 is a schematic diagram of still another implementation method of Step 102 according to the first embodiment of the present disclosure. As illustrated in Fig. 10, the method includes
Step 1001: superimposing adjacent frames or interval frames of the video on the basis of a predetermined weight value so as to obtain a plurality of superimposed frames, and
Step 1002: identifying a failure code on the basis of the plurality of superimposed frames.

In this manner, it is possible to solve the defect that a failure code cannot be accurately displayed in a single image, accurately confirm a failure code, and obtain accurate failure-related information.

At Step 1001, adjacent frames or interval frames of the video may be superimposed two by two on the basis of a weight value, the interval frames being two interval frames separated by a predetermined number of frames.

In the first embodiment of the present disclosure, a weight value for superposition may be set in accordance with actual needs. For example, when the average of weight values is 0.5, the pixel values of the corresponding pixel points in two adjacent frames or two separated frames are thus averaged. Further, for example, when the average of the weight values is 1, the pixel values of the corresponding pixel points in two adjacent frames or two separated frames are thus added.

In the first embodiment of the present disclosure, in the display type in which a part of a failure code is displayed in a certain period of time and the remaining part of the failure code is displayed in another period of time in a continuous cycle, Step 1002 includes sequentially identifying each of the superimposed frames so as to obtain a first partial failure code and a second partial failure code that are identified, and combining the first partial failure code and the second partial failure code into a complete failure code as an identified failure code.

Fig. 11 is a schematic diagram of superimposed adjacent frames of the video according to the first embodiment of the present disclosure. As illustrated in Fig. 11, among the six frame images included in the video, the images in the second frame, the third frame, and the fifth frame have a captured failure code that is incomplete due to the blinking of the digital tube. Superimposition related to addition of pixel values is performed on two adjacent frames. With the first frame and the second frame superimposed, the first partial failure code "LC" is identified. With the third frame and the fourth frame superimposed, no normal failure code is identified, and thus it is discarded. With the fifth frame and the sixth frame superimposed, the second partial failure code "-14" is identified. By combining the first partial failure code "LC" and the second partial failure code "-14", a complete failure code "LC-14" is obtained.

In the first embodiment of the present disclosure, Step 102 may further include, prior to the identification, a step of dividing the video so as to obtain each frame of the video and determining a failure code display area for each frame of the video.

In this manner, it is possible to determine a failure code display area for each frame, and thus facilitate identification of a failure code in the failure code display area.

In the first embodiment of the present disclosure, for example, it is possible to determine the position of the failure code display area on the basis of the predetermined positional relation between the failure code display area and the display panel displaying the failure code, or determine the position of the failure code display area by using a preliminarily trained second identification model.

For example, an area captured by video is substantially the area of the display panel, and the position of the failure code display area is determined on the basis of the predetermined positional relation of the failure code display area on the display panel.

For example, the second identification model may be a neural network, and the neural network may have a structure of a neural network in the related art.

In the first embodiment of the present disclosure, the failure code is identified at Step 102, and then failure-related information corresponding to the failure code is determined at Step 103 on the basis of the identified failure code, and display data is generated on the basis of the failure-related information. In the first embodiment of the present disclosure, a local terminal device may perform Step 103, or a server may perform Step 103.

In the first embodiment of the present disclosure, a failure information database may be preliminarily established. The failure information database stores information related to failures of various devices, and the failure-related information corresponds to the kind, a model number, and a failure code of the device.

In the first embodiment of the present disclosure, the failure-related information corresponding to a failure code may include a failure content corresponding to the failure code and/or a first model of a device in which a failure occurs. The first model is a two dimensional model or a three dimensional model capable of representing each member of the device.

In the first embodiment of the present disclosure, the failure content may include information of a failed position or member and/or the corresponding after-service maintenance information. For example, the after-service maintenance information may include a maintenance method and steps, and may further include, for example, information such as costs associated with replacement of members.

At Step 103, a search is conducted on the failure information database so as to determine failure-related information corresponding to the failure code on the basis of the identified failure code, and display data is generated on the basis of the failure-related information, the display data being display data capable of displaying the failure-related information.

At Step 104, the failure-related information is displayed on the basis of the display data. In the first embodiment of the present disclosure, when a local terminal device performs Step 104, and a server performs Step 103, the server may transmit the generated display data to the terminal device.

In the first embodiment of the present disclosure, the failure-related information may be displayed in various systems. For example, the failure content represented by characters may be displayed on a screen, or the failure content represented by the combination of characters and graphics may be displayed on a screen, or a model of the device capable of representing the failure content by a system of combining truth/falsehood may be displayed. In the first embodiment of the present disclosure, the method of displaying the failure-related information is not limited.

For example, at Step 104, a second model of the device capable of representing a failure content may be displayed on the basis of the display data, the second model being formed on the basis of the first model of the device. In this manner, it is possible to intuitively indicate the structure of the device and the position of a failure, thereby improving the efficiency of failure determination and failure elimination.

For example, the second model is a two dimensional model or a three dimensional model capable of representing each member of the device and representing a failed position or member in an emphasized manner.

For example, the second model is displayed by a system of augmented reality, an image, or a moving image. In this manner, it is possible to grasp the failure-related information more intuitively, thereby further improving the efficiency of failure determination and failure elimination.

For example, the second model displays a failed position or member in a different color. In this manner, it is possible to grasp the failure-related information more intuitively, thereby further improving the efficiency of failure determination and failure elimination.

In the first embodiment of the present disclosure, after-service maintenance information among the failure-related information may be displayed. For example, the maintenance method or steps may be displayed by a system of a moving image, or video. Display of after-service maintenance information further improves the efficiency of failure elimination.

As is understood from the above-described first embodiment, video including a failure code is captured and the failure code is identified on the basis of the video, whereby the complete failure code can be accurately identified without being limited by the failure code display type or the image acquisition parameters. Thus, it is possible to obtain failure-related information quickly and accurately on the basis of the identified complete and accurate failure code.

### (Second Embodiment)

A second embodiment of the present disclosure provides a failure identification and handling system corresponding to the failure identification and handling method described in the first embodiment. For the concrete implementation thereof, the implementation of the method described in the first embodiment may be referred to, and the same or related contents will not be described herein any further.

Fig. 12 is a schematic diagram of a failure identification and handling system according to the second embodiment of the present disclosure. As illustrated in Fig. 12, a failure identification and handling system 1200 includes
an imaging unit 1201 that captures video including a failure code,
an identification unit 1202 that identifies a failure code in the video and obtains an identified failure code,
a determination unit 1203 that determines failure-related information corresponding to the failure code on the basis of the identified failure code, and generates display data on the basis of the failure-related information, and
a display unit 1204 that displays the failure-related information on the basis of the display data.

In the second embodiment of the present disclosure, as illustrated in Fig. 12, the failure identification and handling system 1200 may include a terminal device 1210 and a server 1220, and the terminal device 1210 may include the imaging unit 1201 and the display unit 1204, while the server 1220 may include the identification unit 1202 and the determination unit 1203.

Moreover, as illustrated in Fig. 12, the terminal device 1210 further includes
a first transmission unit 1205 that transmits the video to the server 1220, and
a first reception unit 1206 that receives display data from the server 1220, and
the server 1220 further includes
a second reception unit 1207 that receives video including a failure code captured by the terminal device 1210 from the terminal device, and
a second transmission unit 1208 that transmits the display data to the terminal device 1210.

In the second embodiment of the present disclosure, the terminal device 1210 may be various kinds of terminal devices. For example, the terminal device may be a smartphone, an intelligent tablet, or intelligent glasses.

The server 1220 may be various kinds of servers, and may be, for example, a cloud server.

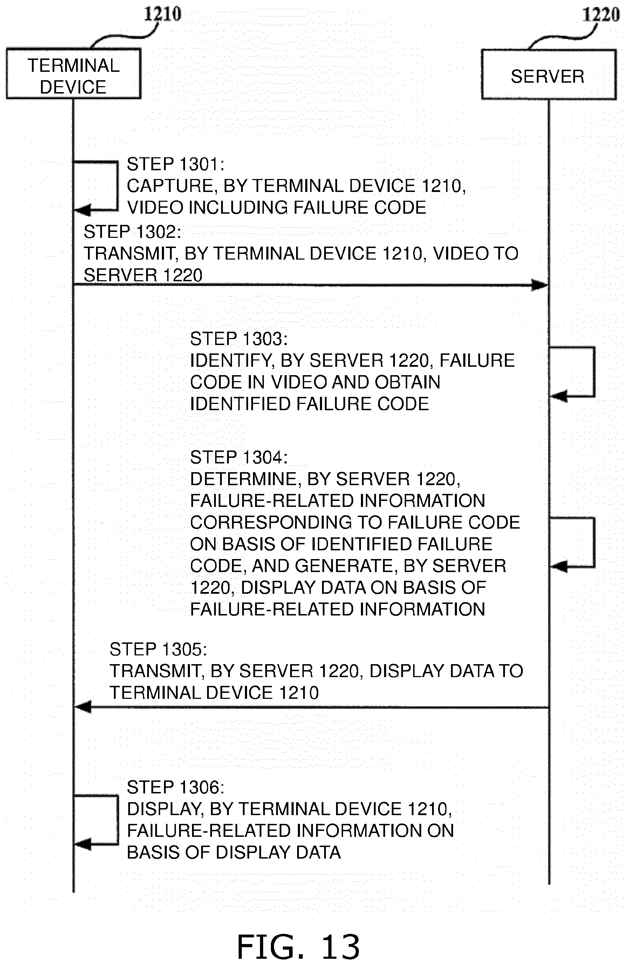

Fig. 13 is a schematic diagram of the failure identification and handling system according to the second embodiment of the present disclosure performing a corresponding method. As illustrated in Fig. 13, the method includes
Step 1301: capturing, by the terminal device 1210, video including a failure code,
Step 1302: transmitting, by the terminal device 1210, the video to the server 1220,
Step 1303: identifying, by the server 1220, the failure code in the video and obtaining an identified failure code,
Step 1304: determining, by the server 1220, failure-related information corresponding to the failure code on the basis of the identified failure code, and generating, by the server 1220, display data on the basis of the failure-related information,
Step 1305: transmitting, by the server 1220, the display data to the terminal device 1210, and
Step 1306: displaying, by the terminal device 1210, the failure-related information on the basis of the display data.

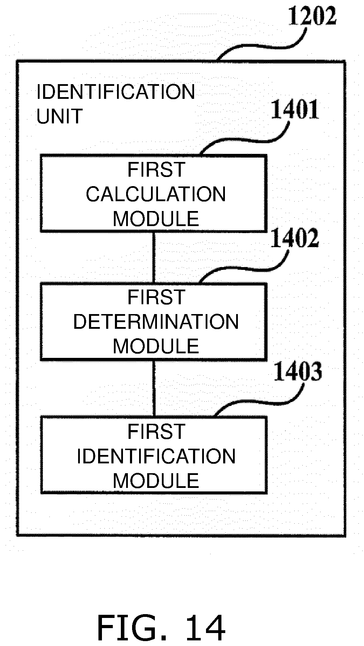

Fig. 14 is a schematic view of an embodiment of the identification unit according to the second embodiment of the present disclosure. As illustrated in Fig. 14, the identification unit 1202 includes
a first calculation module 1401 that calculates an average value of pixel values of all pixel points in a failure code display area of the frame,
a first determination module 1402 that determines, when the average value satisfies a predetermined condition, that the failure code display area includes a failure code, and
a first identification module 1403 that identifies the failure code display area including the failure code by using a preliminarily trained first identification model so as to obtain the identified failure code.

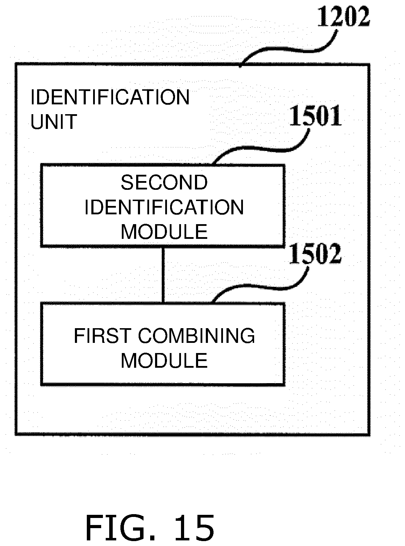

Fig. 15 is a schematic view of another embodiment of the identification unit according to the second embodiment of the present disclosure. As illustrated in Fig. 15, the identification unit 1202 includes
a second identification module 1501 that sequentially identifies each frame of the video so as to obtain a first partial failure code and a second partial failure code that are identified, and
a first combining module 1502 that combines the first partial failure code and the second partial failure code into a complete failure code as an identified failure code.

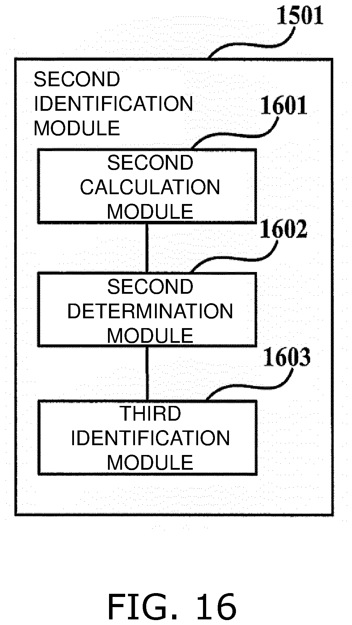

Fig. 16 is a schematic diagram of the second identification module according to the second embodiment of the present disclosure. As illustrated in Fig. 16, the second identification module 1501 includes
a second calculation module 1601 that calculates an average value of pixel values of all pixel points in a failure code display area of the frame,
a second determination module 1602 that determines, when the average value satisfies a predetermined condition, that the failure code display area includes a failure code, and
a third identification module 1603 that identifies the failure code display area including the failure code by using a preliminarily trained first identification model so as to obtain the identified first partial failure code or the identified second partial failure code.

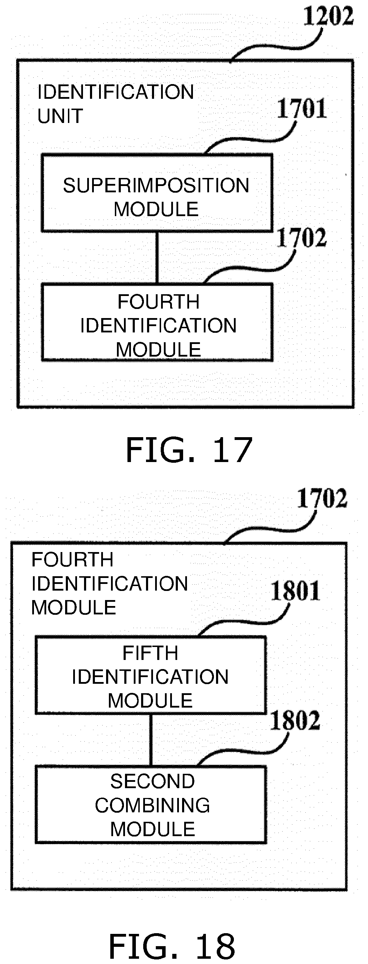

Fig. 17 is a schematic view of another embodiment of the identification unit according to the second embodiment of the present disclosure. As illustrated in Fig. 17, the identification unit 1202 includes
a superimposition module 1701 that superimposes adjacent frames or interval frames of the video on the basis of a predetermined weight value so as to obtain a plurality of superimposed frames, and
a fourth identification module 1702 that identifies a failure code on the basis of the plurality of superimposed frames.

Fig. 18 is a schematic diagram of the fourth identification module according to the second embodiment of the present disclosure. As illustrated in Fig. 18, the fourth identification module 1702 includes
a fifth identification module 1801 that sequentially identifies each superimposed frame so as to obtain a first partial failure code and a second partial failure code that are identified, and
a second combining module 1802 that combines the first partial failure code and the second partial failure code into a complete failure code as an identified failure code.

In the second embodiment of the present disclosure, the identification unit 1202 may further include
a dividing module that divides the video so as to obtain each frame of the video, and
a second determination module that determines a failure code display area for each frame of the video.

In the second embodiment of the present disclosure, the second determination module is able to determine the position of the failure code display area on the basis of the predetermined positional relation between the failure code display area and the display panel displaying the failure code, or determine the position of the failure code display area by using the preliminarily trained second identification model.

In the second embodiment of the present disclosure, the failure-related information corresponding to a failure code may include a failure content corresponding to the failure code and/or the first model of a device in which a failure occurs.

In the second embodiment of the present disclosure, the display unit 1204 may display, on the basis of the display data, the second model of the device capable of representing a failure content, the second model being formed on the basis of the first model of the device.

For example, the first model of the device is a two dimensional model or a three dimensional model capable of representing each member of the device, and the second model of the device is a two dimensional model or a three dimensional model capable of representing each member of the device and representing a failed position or member in an emphasized manner.

In addition, the display unit 1204 may display the second model by a system of augmented reality, an image, or a moving image. In the second embodiment of the present disclosure, the failure content may include information of a failed position or member and/or the corresponding after-service maintenance information.

In the second embodiment of the present disclosure, for the implementation of the functions of the above-described units and modules, the contents of the related steps in the first embodiment may be referred to. The description thereof is omitted here.

As is understood from the above-described embodiments, video including a failure code is captured and the failure code is identified on the basis of the video, whereby the complete failure code can be accurately identified without being limited by the failure code display type or the image acquisition parameters. Thus, it is possible to obtain failure-related information quickly and accurately on the basis of the identified complete and accurate failure code.

### (Third embodiment)

A third embodiment of the present disclosure provides a terminal device corresponding to the failure identification and handling method described in the first embodiment. For the concrete implementation thereof, the implementation of the method described in the first embodiment may be referred to, and the same or related contents will not be described herein any further.

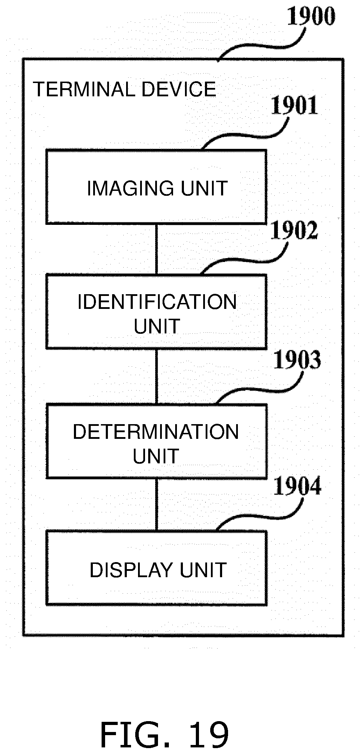

Fig. 19 is a schematic diagram of the terminal device according to the third embodiment of the present disclosure. As illustrated in Fig. 19, a terminal device 1900 includes
an imaging unit 1901 that captures video including a failure code,
an identification unit 1902 that identifies a failure code in the video and obtains an identified failure code,
a determination unit 1903 that determine failure-related information corresponding to the failure code on the basis of the identified failure code, and generates display data on the basis of the failure-related information, and
a display unit 1904 that displays the failure-related information on the basis of the display data.

That is, a terminal device may perform all steps in the first embodiment, and for the implementation of the functions of the units of the terminal device, the contents of the related steps in the first embodiment may be referred to. The description thereof is omitted here.

As is understood from the above-described embodiments, video including a failure code is captured and the failure code is identified on the basis of the video, whereby the complete failure code can be accurately identified without being limited by the failure code display type or the image acquisition parameters. Thus, it is possible to obtain failure-related information quickly and accurately on the basis of the identified complete and accurate failure code.

The above-described device and method of the present disclosure may be achieved by hardware, or may be achieved by the combination of hardware and software. The present disclosure relates to a computer-readable program as follows. When the program is executed by a logic unit, the logic unit is able to achieve the above-described device or components, or the logic unit is able to achieve the above-described various methods or steps.

The present disclosure relates to a storage medium for storing the above-described program, such as a hard disk, a magnetic disk, an optical disk, a DVD, a flash memory, and the like.

The present disclosure has been described above in conjunction with the specific embodiments. However, it should be understood by those skilled in the art that these descriptions are only exemplary and do not limit the protection scope of the present disclosure. Those skilled in the art may make variations and modifications with respect to the present disclosure on the basis of the spirit and principle of the present disclosure, and these variations and modifications also fall within the scope of the present disclosure.

### REFERENCE SIGNS LIST

- 1200: failure identification and handling system
- 1210: terminal device
- 1201: imaging unit
- 1202: identification unit
- 1203: determination unit
- 1204: display unit
- 1205: first transmission unit
- 1206: first reception unit
- 1207: second reception unit
- 1208: second transmission unit
- 1220: server
- 1401: first calculation module
- 1402: first determination module
- 1403: first identification module
- 1501: second identification module
- 1502: first combining module
- 1601: second calculation module
- 1602: second determination module
- 1603: third identification module
- 1701: superimposition module
- 1702: fourth identification module
- 1801: fifth identification module
- 1802: second combining module
- 1901: imaging unit
- 1902: identification unit
- 1903: determination unit
- 1904: display unit

## Claims

1. A failure identification and handling method, comprising:
a step of capturing video including a failure code;
a step of identifying the failure code in the video and obtaining an identified failure code;
a step of determining failure-related information corresponding to the failure code on the basis of the identified failure code, and generating display data on the basis of the failure-related information; and
a step of displaying the failure-related information on the basis of the display data.

2. The failure identification and handling method according to claim 1, wherein the step of identifying the failure code in the video and obtaining an identified failure code includes
sequentially identifying each frame of the video, the step of identifying one frame of the video including
calculating an average value of pixel values of all pixel points in a failure code display area of the frame,
determining, when the average value satisfies a predetermined condition, that the failure code display area includes a failure code, and
identifying the failure code display area including the failure code by using a preliminarily trained first identification model so as to obtain the identified failure code.

3. The failure identification and handling method according to claim 1, wherein the step of identifying the failure code in the video and obtaining an identified failure code includes
sequentially identifying each frame of the video so as to obtain a first partial failure code and a second partial failure code that are identified, and
combining the first partial failure code and the second partial failure code into a complete failure code as the identified failure code.

4. The failure identification and handling method according to claim 3, wherein the step of identifying one frame of the video includes
calculating an average value of pixel values of all pixel points in a failure code display area of the frame,
determining, when the average value satisfies a predetermined condition, that the failure code display area includes a failure code, and
identifying the failure code display area including the failure code by using a preliminarily trained first identification model so as to obtain the first partial failure code or the second partial failure code that are identified.

5. The failure identification and handling method according to claim 1, wherein the step of identifying the failure code in the video and obtaining an identified failure code includes
superimposing adjacent frames or interval frames of the video on the basis of a predetermined weight value so as to obtain a plurality of superimposed frames, and
identifying a failure code on the basis of the plurality of superimposed frames.

6. The failure identification and handling method according to claim 5, wherein the step of identifying a failure code on the basis of the plurality of superimposed frames includes
sequentially identifying each superimposed frame so as to obtain a first partial failure code and a second partial failure code that are identified, and
combining the first partial failure code and the second partial failure code into a complete failure code as the identified failure code.

7. The failure identification and handling method according to any one of claims 1 to 6, wherein the step of identifying the failure code in the video and obtaining an identified failure code further includes
dividing the video so as to obtain each frame of the video, and
determining a failure code display area for each frame of the video.

8. The failure identification and handling method according to claim 7, wherein the step of determining a failure code display area for each frame of the video includes
determining a position of the failure code display area in accordance with predetermined positional relation between the failure code display area and a display panel displaying a failure code, or
identifying the position of the failure code display area by using a preliminarily trained second identification model.

9. The failure identification and handling method according to claim 1, wherein the failure-related information corresponding to the failure code includes a failure content corresponding to the failure code and/or a first model of a device in which a failure occurs.

10. The failure identification and handling method according to claim 9, wherein the step of displaying the failure-related information on the basis of the display data includes
displaying, on the basis of the display data, a second model of the device capable of representing the failure content, the second model being formed on the basis of the first model.

11. The failure identification and handling method according to claim 10, wherein the first model of the device is a two dimensional model or a three dimensional model capable of representing each member of the device,
the second model of the device is a two dimensional model or a three dimensional model capable of representing each member of the device and representing a failed position or member in an emphasized manner, and
the step of displaying a second model of the device capable of representing the failure content includes displaying the second model by a system of augmented reality, an image, or a moving image.

12. The failure identification and handling method according to any one of claims 9 to 11, wherein the failure content includes information of a failed position or member and/or corresponding after-service maintenance information.

13. A failure identification and handling system, comprising:
an imaging unit that captures video including a failure code;
an identification unit that identifies the failure code in the video and obtains an identified failure code;
a determination unit that determines failure-related information corresponding to the failure code on the basis of the identified failure code, and generates display data on the basis of the failure-related information; and
a display unit that displays the failure-related information on the basis of the display data.

14. The failure identification and handling system according to claim 13, wherein the identification unit sequentially identifies each frame of the video, and
the identification unit includes
a first calculation module that calculates an average value of pixel values of all pixel points in a failure code display area of the frame,
a first determination module that determines, when the average value satisfies a predetermined condition, that the failure code display area includes a failure code, and
a first identification module that identifies the failure code display area including the failure code by using a preliminarily trained first identification model so as to obtain the identified failure code.

15. The failure identification and handling system according to claim 13, wherein the identification unit includes
a second identification module that sequentially identifies each frame of the video so as to obtain a first partial failure code and a second partial failure code that are identified, and
a first combining module that combines the first partial failure code and the second partial failure code into a complete failure code as the identified failure code.

16. The failure identification and handling system according to claim 15, wherein the second identification module includes
a second calculation module that calculates an average value of pixel values of all pixel points in a failure code display area of the frame,
a second determination module that determines, when the average value satisfies a predetermined condition, that the failure code display area includes a failure code, and
a third identification module that identifies the failure code display area including the failure code by using a preliminarily trained first identification model so as to obtain a first partial failure code or a second partial failure code that are identified..

17. The failure identification and handling system according to claim 13, wherein the identification unit includes
a superimposition module that superimposes adjacent frames or interval frames of the video on the basis of a predetermined weight value so as to obtain a plurality of superimposed frames, and
a fourth identification module that identifies a failure code on the basis of the plurality of superimposed frames.

18. The failure identification and handling system according to claim 17, wherein the fourth identification module includes
a fifth identification module that sequentially identifies each superimposed frame so as to obtain a first partial failure code and a second partial failure code that are identified, and
a second combining module that combines the first partial failure code and the second partial failure code into a complete failure code as the identified failure code.

19. The failure identification and handling system according to any one of claims 13 to 18, wherein the identification unit includes
a dividing module that divides the video so as to obtain each frame of the video, and
a second determination module that determines a failure code display area for each frame of the video.

20. The failure identification and handling system according to claim 19, wherein the second determination module determines a position of the failure code display area on the basis of predetermined positional relation between the failure code display area and a display panel displaying the failure code, or determines the position of the failure code display area by using a preliminarily trained second identification model.

21. The failure identification and handling system according to claim 13, wherein the failure-related information corresponding to the failure code includes a failure content corresponding to the failure code and/or a first model of a device in which a failure occurs.

22. The failure identification and handling system according to claim 21, wherein the display unit displays, on the basis of the display data, a second model of the device capable of representing the failure content, the second model being formed on the basis of the first model.

23. The failure identification and handling system according to claim 22, wherein the first model of the device is a two dimensional model or a three dimensional model capable of representing each member of the device,
the second model of the device is a two dimensional model or a three dimensional model capable of representing each member of the device and representing a failed position or member in an emphasized manner, and
the display unit displays the second model by a system of augmented reality, an image, or a moving image.

24. The failure identification and handling system according to any one of claims 21 to 23, wherein the failure content includes information of a failed position or member and/or corresponding after-service maintenance information.

25. The failure identification and handling system according to claim 13, wherein the failure identification and handling system includes a terminal device and a server,
the terminal device includes the imaging unit and the display unit, and
the server includes the identification unit and the determination unit.

26. The failure identification and handling system according to claim 25, wherein the terminal device is a smartphone, an intelligent tablet, or intelligent glasses.

27. A terminal device, comprising:
an imaging unit that captures video including a failure code;
a first transmission unit that transmits the video to a server;
a first reception unit that receives display data from the server; and
a display unit that displays failure-related information on the basis of the display data.

28. A server, comprising:
a second reception unit that receives video including a failure code captured by a terminal device from the terminal device;
an identification unit that identifies the failure code in the video and obtains an identified failure code;
a determination unit that determines failure-related information corresponding to the failure code on the basis of the identified failure code, and generates display data on the basis of the failure-related information; and
a second transmission unit that transmits the display data to the terminal device.

29. A terminal device, comprising:
an imaging unit that captures video including a failure code;
an identification unit that identifies the failure code in the video and obtains an identified failure code;
a determination unit that determines failure-related information corresponding to the failure code on the basis of the identified failure code, and generates display data on the basis of the failure-related information; and
a display unit that displays the failure-related information on the basis of the display data.
